# EUROPEAN PATENT APPLICATION

(11) **EP 3 865 828 A1**
(43) Date of publication of application: **18.08.2021**
(21) Application number: 19929192.3
(22) Date of filing: 05.11.2019
(51) Int. Cl.: G01D 5/245

(54) **MULTIPURPOSE ROTARY ENCODER**

(71) Applicant: Igarashi Electric Works Ltd., Kawasaki-shi, Kanagawa 212-0006 (JP)
(72) Inventor: TADA Junichi, Kawasaki-shi, Kanagawa 212-0006 (JP)
(74) Representative: Hirsch & Associés
(86) International application number: PCT/JP2019/043339
(87) International publication number: WO 2021/090372

(57) **Abstract**

An inexpensive and highly versatile rotary encoder that uses a MR sensor and reduces the processing required for a microcomputer is provided.

The rotary encoder is equipped with a mechanical angle-electric angle signal converter and a non-volatile memory. The mechanical angle-electric angle signal converter comprises a function to convert a mechanical angle output information of a MR sensor unit into an incremental signal for generating a drive signal of a DC motor, and a function of converting output information of the MR sensor unit into an absolute signal for generating a drive signal of the DC motor. The non-volatile memory has signal conversion data as initial setting data for converting the output information of the MR sensor unit into the drive signal of the DC motor, which corresponds to the type of the DC motor to which the rotary encoder is mounted. The mechanical angle-electric angle signal converter is configured to convert the output information from the MR sensor unit into signals for generating the drive signal of the DC motor based on the signal conversion data, during operation of the DC motor.

## Description

### TECHNICAL FIELD OF THE INVENTION

The present invention relates to a rotary encoder, and more particularly to a general-purpose rotary encoder that employs a MR sensor unit and is suitable for use in industrial equipment.

### BACKGROUND OF THE INVENTION

The rotary encoder is used as an encoder of an industrial robot etc. to measure an absolute angular position of a rotating shaft driven by a motor. For example, as a control method for a brushless DC motor, the motor is controlled as a servomotor, by synchronizing the rotary encoder that detects each of Z-phase, U, V and W-phase of the brushless DC motor with magnetic pole positions of a rotor of the motor.

Patent Document 1 discloses a rotary encoder including a multi-rotation information detector and an angle detector, which can calculate multi-rotation information and detect and notify an abnormal state of a device. The angle detector is an optical encoder having an absolute pattern ABS and an incremental pattern INC.

Patent Document 2 discloses a motor control device equipped with a magnetic sensor (one set of MR sensor unit) that detects rotation phase of a rotation axis of a motor. The motor control device is configured to assign addresses of an EEPROM to A/B/Z-phase signals, U/V/W-phase drive signals and absolute origin position information, and to record them in the EEPROM as absolute signal data.

### [Prior art literature]

### [Patent documents]

[Patent document 1] JP2018-136147 A
[Patent document 2] JP6339307 B1

### SUMMARY OF THE INVENTION

### [Problem to be Solved by the Invention]

As DC motors to each of which a rotary encoder is mounted, an incremental type DC motor (a Brushless DC motor, a DC motor with brush) and an absolute type DC motor (a Brushless DC motor, a DC motor with brush) are known.

Further, the brushless DC motor to which the rotary encoder is mounted is a type of motor that does not use a Hall element for detecting a position of the rotor and does not perform vector control.

Normally, an incremental type rotary encoder generates and outputs data for driving an incremental type DC motor, for example, according to specifications of the DC motor to be mounted. In other words, the incremental type rotary encoder generates and outputs incremental drive signal data (A-phase, B-phase, Z-phase, U, V and W-phase signals). A motor driver of the brushless DC motor generates a drive signal for driving the motor such as an inverter, for example, a PWM signal, based on the drive signal data.

On the other hand, an absolute type rotary encoder generates and outputs data for generating a drive signal for an absolute type DC motor according to specifications of the DC motor to be mounted. In other words, the absolute type rotary encoder generates and outputs data of electric angles for generating an absolute drive signal. The motor driver of the brushless DC motor generates the absolute drive signal based on absolute type data of electric angles, and further generates such as a PWM signal for driving an inverter to drive the motor.

As described above, the conventional rotary encoder is configured to generate and output drive signal data to the corresponding the DC motor according to type and specifications of the DC motor to be mounted. Generally, an incremental type rotary encoder and an absolute type rotary encoder that individually configured to meet the type and specifications of the DC motor to be mounted are known.

Usually, many optical rotary encoders such as described in Patent document 1 use a glass substrate and form a slit pattern on the substrate, to ensure high accuracy of the rotary encoder.

However, in such a high-precision optical rotary encoder, a slit pattern is formed corresponding to a specific motor specification, for example, number of poles and number of pulses per rotation. Therefore, it is necessary to separately formed another slit pattern for motors having other specifications. In other words, the optical encoder has a limited range of motors that can be mounted, and has a complicated structure as compared with the magnetic sensor type encoder and is therefore expensive.

On the other hand, the motor control device described in Patent document 2 includes a control unit that controls the power supplied to each of the three-phase stator coils of U, V and W-phases of a brushless DC servo motor, and a magnetic sensor that detects the rotation of a rotor with multi-pole permanent rotor magnets.

The control unit calculates a rotation position of the brushless DC servomotor that drives the driven member, and generates information of a drive signal for driving an inverter that supplies current to each of U/V/W-phase coils of the brushless DC servomotor, whereby the driven member is operated at each predetermined position.

During normal operation, a microcomputer performs arithmetic processing for generating the three-phase drive signal of U/V/W-phase signals according to an operation command, a load state, etc. Therefore, the microcomputer needs to have capability necessary for the arithmetic processing of the three-phase drive signal. For reducing the cost of the motor control device, it is desirable to further reduce the processing capacity required for this microcomputer.

Further, since the control unit is usually configured according to specifications of a specific motor, it is necessary to provide another control unit corresponding to the specifications of another motor with other specifications.

One object of the present invention is to provide a general-purpose rotary encoder having excellent versatility capable of meeting various specifications of an incremental type DC motor and an absolute type DC motor.

Another object of the present invention is to provide an inexpensive rotary encoder using a set of MR sensors while capable of reducing arithmetic processing of drive signals etc. so that reducing processing required for a microcomputer.

### [Means for Solving Problem]

According to one aspect of the present invention, the rotary encoder comprising:
a MR sensor unit for outputting mechanical angle information of rotation angle of a rotation axis of a DC motor;
a mechanical angle-electric angle signal converter for converting output information of the MR sensor unit into signal information for generating a drive signal of the DC motor; and
a non-volatile memory,
wherein the mechanical angle-electric angle signal converter comprises:
   an incremental type mechanical angle-electric angle signal conversion unit that converts the output information of the MR sensor unit into an incremental signal for generating the drive signal of the DC motor, and
   an absolute type mechanical angle-electric angle signal conversion unit that converts the output information of the MR sensor unit into an absolute signal for generating the drive signal of the DC motor,
   wherein the non-volatile memory has signal conversion data as initial setting data for converting the output information of the MR sensor unit into the incremental signal or the absolute signal for generating the drive signal of the DC motor, which corresponds to a type of the DC motor to which the rotary encoder is mounted, and
   wherein the mechanical angle-electric angle signal converter is configured to convert the output information from the MR sensor unit into the signal for generating the drive signal of the DC motor based on the signal conversion data, during operation of the DC motor.

According to the above aspect of the present invention, by using the MR sensor unit, an incremental type rotary encoder or an absolute type rotary encoder having excellent versatility that can correspond to various motor specifications can be provided.

For example, when the DC motor to which the rotary encoder is mounted is an incremental type DC motor, by using an initial setting unit, at the time of initial setting of the rotary encoder, the rotary encoder is provided with a function of converting the output of the MR sensor unit (A, B, Z-phase signals = mechanical angle) into an incremental driving signal (for example, A, B, Z, U, V and W-phase signals = electrical angle) necessary for driving the DC motor to be mounted and outputting the incremental driving signal. This rotary encoder converts the output signal (mechanical angle) of the MR sensor unit into an incremental drive signal of the motor (electrical angle), when the DC motor to be mounted is operated.

Further, when the DC motor to which the rotary encoder is mounted is an absolute type DC motor, at the time of initial setting of the rotary encoder, the rotary encoder is provided with a function of converting the absolute output of the MR sensor unit into an absolute electrical angle data required to generate the drive signal of the DC motor to be mounted and outputting the absolute electrical angle data, at the time of initial setting of the rotary encoder. Therefore, the rotary encoder has a function of converting the output signal (mechanical angle) of the MR sensor unit into the absolute signal for generating the drive signal of the DC motor driving signal generation (electrical angle), when the DC motor to be mounted is operated.

Further, according to the above aspect of the present invention, default data of motor drive signal can be read directly from the non-volatile memory in the rotary encoder based on the output signal from the MR sensor unit, by processing of mechanical angle-electric angle signal conversion using the signal conversion data. Therefore, an inexpensive rotary encoder that reduces the arithmetic processing of the electric angle signal conversion, in other words, reduces the processing required for the microcomputer, can be provided.

### BRIEF DESCRIPTION OF THE DRAWINGS

FIG. 1 is a diagram showing a configuration example of an initial setting system for a rotary encoder according to a first embodiment of the present invention.
FIG. 2A is a diagram showing a configuration example of a MR sensor unit in the rotary encoder of FIG. 1.
FIG. 2B is a diagram showing a concept of a signal processing method in the MR sensor unit of FIG. 2A.
FIG. 3 is a vertical cross-sectional view showing an example of a main part of a brushless DC motor equipped with the rotary encoder of FIG. 1.
FIG. 4 is a block diagram showing functions of the initial setting system for the rotary encoder of FIG. 1.
FIG. 5 is a flowchart showing an example of initial setting processing corresponding to an incremental type DC motor by the initial setting system for the rotary encoder of FIG. 1.
FIG. 6 is a diagram showing an example of a process of generating A-phase, B-phase, Z-phase, U, V and W-phase signals using signal conversion data in the initial setting process of FIG. 5.
FIG. 7 is a diagram showing an image of an example of signal conversion data generated by the processing of FIG. 5 and recorded in a non-volatile memory.
FIG. 8 is a diagram showing a state in which the rotary encoder after the initial setting shown in FIG. 5 is mounted on the brushless DC motor and used.
FIG. 9 is a flowchart showing an example of an initial setting processing corresponding to an absolute type DC motor by the initial setting system for the rotary encoder of FIG. 1.
FIG. 10 is an image diagram showing an example of a process of generating information for generating a drive signal for the absolute type DC motor, which is generated by the process of FIG. 9 and recorded in the non-volatile memory.
FIG. 11 is a diagram showing a state in which the rotary encoder after the initial setting shown in FIG. 9 is mounted on the brushless DC motor and used.
FIG. 12 is a perspective view of a robot equipped with a rotary encoder according to a second embodiment of the present invention.

### DETAILED DESCRIPTION OF THE EMBODIMENTS

Hereinafter, embodiments of the present invention will be described in detail with reference to drawings.

### Embodiment 1

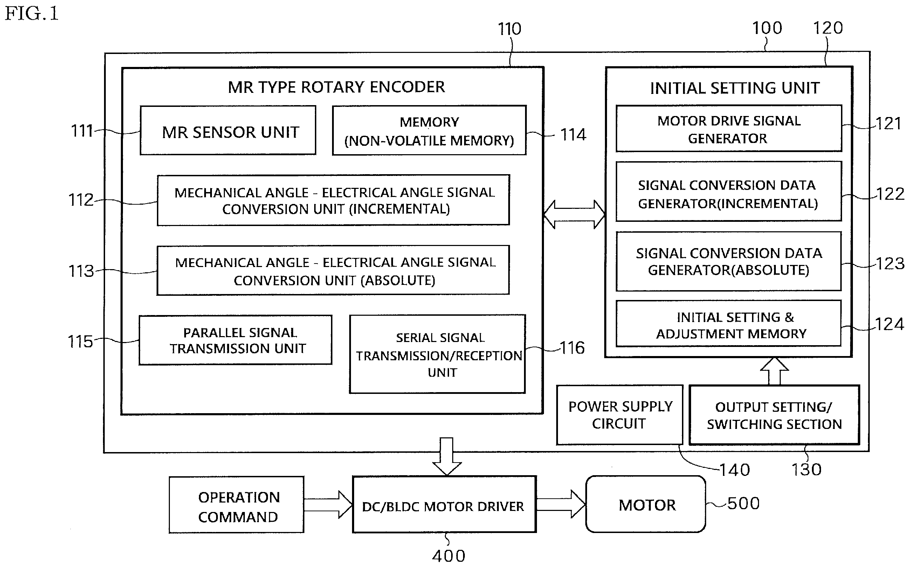

FIG. 1 is a diagram showing a configuration example of an initial setting system for a rotary encoder according to a first embodiment of the present invention.

An initial setting system 100 for a rotary encoder includes a rotary encoder 110 used at the time of initial setting and normal operation of a brushless DC motor, an initial setting unit 120 used only at the time of the initial setting, and an output setting/switching section 130. These are electrically connected via a detachable socket or the like. Reference numeral 140 denotes a power supply circuit, which provides a predetermined voltage, for example, 5V DC power supply to the rotary encoder 110, the initial setting unit 120, etc.

Information for generating a drive signal, which is output of the rotary encoder 110, is supplied to a DC motor 500 to which the rotary encoder 110 is mounted via a motor driver 400.

The motor driver 400 includes a brushless DC motor type driver (BLDC driver) and a brushed DC motor type driver (DC driver) according to the type of DC motor 500 to which the rotary encoder 110 is mounted. This motor driver 400 drives the DC motor by generating a drive signal that controls speed and position of the DC motor, for example, a PWM signal for driving an inverter, based on the output of the rotary encoder 110, an operation command, a load of the motor, etc.

The rotary encoder 110 has a MR sensor unit 111 and a mechanical angle-electric angle signal converter comprising a mechanical angle-electric angle signal conversion unit (incremental) 112 and a mechanical angle-electric angle signal conversion unit (absolute) 113. Further, the rotary encoder 110 has a memory 114 including a non-volatile memory, a parallel signal transmission unit 115 and a serial signal transmission/reception unit 116.

Examples of the non-volatile memory 114 of the encoder include PROM, EPROM, EEPROM, and flash memory etc. Signal conversion data is recorded in this non-volatile memory as initial setting data.

The mechanical angle-electric angle signal conversion units 112 and 113 have a function of generating an incremental or absolute encoder output signal according to the type and specifications of the DC motor to which the electric angle signal conversion unit is installed, based on the output signal of the MR sensor unit 111 and the data of the non-volatile memory.

The mechanical angle-electric angle signal conversion unit (incremental) 112 has a function to convert the incremental A, B, Z-phase signals (mechanical angle), which is the output signal of the MR sensor unit 111, into a signal (electric angle) for driving a DC motor, based on the signal conversion data of the non-volatile memory, which is initially set according to the type and specifications of the DC motor to which the rotary encoder 110 is mounted.

For example, when the DC motor is a brushless DC motor, the mechanical angle-electric angle signal conversion unit (incremental) 112 has a function of converting the the output signal of the MR sensor unit 111 into U, V and W-phase signals for driving the brushless DC motor based on the signal conversion data of the default non-volatile memory.

When the DC motor to which the mechanical angle-electric angle signal conversion unit 112 is mounted is a brushed DC motor, the conversion unit 112 has a function of converting the output signal of the MR sensor unit 111 into A, B, Z-phase signals for driving the brushed DC motor based on the signal conversion data of the non-volatile memory.

The mechanical angle-electric angle signal conversion unit (absolute) 113 has a function of converting an absolute signal (mechanical angle), which is an output signal of the MR sensor unit 111, into electric angle data for driving a DC motor, based on the signal conversion data of the non-volatile memory that is initially set according to specifications of the DC motor to which the rotary encoder 110 is mounted.

The parallel signal transmission unit 115 and the serial signal transmission/reception unit 116 have a function of converting various information into a parallel signal or a serial signal and transmitting/receiving the information, between the rotary encoder 110, the initialization unit 120, and the motor driver 400. For example, the A-phase/B-phase signals and Z-phase signals generated by the parallel transmission process are converted into transmission data (BUS) for serial transmission conforming to the serial transmission communication standard, and this BUS signal is transmitted via a communication cable.

The initial setting unit 120 includes a motor drive signal generator 121, a signal conversion data generator (incremental) 122, a signal conversion data generator (absolute) 123, and an initial setting/adjustment memory 124.

The output setting/switching section 130 is provided with a terminal with a display screen, and has a function of setting conditions for the initial setting signal generated by the initial setting unit 120 according to the type and specifications of the motor to which the rotary encoder is mounted. For example, when the motor to be mounted is an incremental type brushless DC motor, number of poles of the motor, number of pulses per rotation (P/R), number of U, V and W-phase signals per rotation, and type of output signal (incremental), etc. are set by the output setting/switching section 130. In the case of an incremental type brushed DC motor, the number of pulses per rotation (P/R) etc. are set by the output setting/switching section.

Further, when the motor to be installed is an absolute type brushless DC motor or a brushed DC motor, resolutions (number of bits), output conditions (serial or parallel), etc. are set by the output setting/switching section.

The motor drive signal generator 121 has a function of generating a drive signal of the motor according to the conditions set by the output setting/switching section 130. For example, when the motor to be mounted is an incremental brushless DC motor, the motor drive signal generator has a function of generating U, V and W-phase signals for driving the brushless DC motor according to the setting conditions, based on the A, B, Z-phase signals output from the MR sensor unit 111 at the time of initial setting of the motor.

When the motor to be mounted is an absolute type DC motor, the motor drive signal generator has a function of generating control absolute data for driving the brushless DC motor for initial setting from the absolute value of the rotation angle of the DC motor, that is, the absolute signal obtained from the output of the MR sensor unit 111, according to the setting conditions, at the time of initial setting of the motor.

Further, when the DC motor to which the mechanical angle-electric angle signal converter is mounted is a brushed DC motor, the motor drive signal generator has a function of generating incremental signal or absolute signal necessary for driving the motor for initial setting based on the signal output from the MR sensor unit 111, according to the setting conditions.

The signal conversion data generator (incremental) 122 has a function of generating signal conversion data to convert the output of the MR sensor unit 111 into the incremental drive signal required to drive the DC motor to be mounted and recording them in the non-volatile memory as initial setting data. For example, when the motor to be mounted is an incremental type brushless DC motor, the signal conversion data generator 122 generates signal conversion data that gives a correspondence between the A, B, Z-phase signals output from the MR sensor unit 111 and the U, V and W-phase signals generated by the motor drive signal generator 121, for driving the brushless DC motor and records the data in the non-volatile memory as initial setting data.

When the motor to be mounted is a brushed DC motor, the signal conversion data generator generates signal conversion data that gives a correspondence between the A, B, Z-phase signals output from the MR sensor unit 111 and the A, B, Z-phase signals generated by the motor drive signal generator 121, for driving the brushed DC motor and records it in the non-volatile memory as initial setting data.

Further, the signal conversion data generator (absolute) 123 has a function of generating signal conversion data for the absolute type DC motor and recording it in a non-volatile memory as initial setting data. That is, the signal conversion data generator 123 generates signal conversion data which gives a correspondence relationship between the absolute signal (mechanical angle) obtained from the output of the MR sensor unit 111 and the control absolute data (electrical angle) generated by the motor drive signal generator 121, and records the signal conversion data in the non-volatile memory as initial setting data.

In the initial setting/adjustment memory 124, data of the drive signal of the motor, which are necessary for the initial setting, and information related to the type and specifications of the motor are recorded.

In the rotary encoder 110, in a state of being mounted on the motor 500 to be mounted together with the initial setting unit 120, according to the conditions input from the output setting/switching section 130, signal conversion data is generated by the signal conversion data generator (incremental) 122 and the signal conversion data generator (absolute) 123 of the initial setting unit 120, and these data are recorded in the non-volatile memory as the initial setting values.

After that, when the motor 500 to be mounted is in normal operation, in the rotary encoder 110, based on the detected value of the MR sensor unit 111 and the initial setting value recorded in the non-volatile memory, predetermined signal conversion processing is performed by the mechanical angle-electric angle signal conversion units 112 and 113. Upon receiving the output of the rotary encoder 110, the motor driver 400 generates a predetermined drive signal and drives the motor 500.

Each of the rotary encoder 110, the initial setting unit 120, and the output setting/switching section 130 are realized by a single-chip microcomputer in which, a CPU, a memory such as a ROM or RAM, an oscillation circuit, a timer, a I/O interface, a serial I/F, etc. integrated in one LSI, for example. Each of above functions is realized by executing a computer program held in the memory on the CPU.

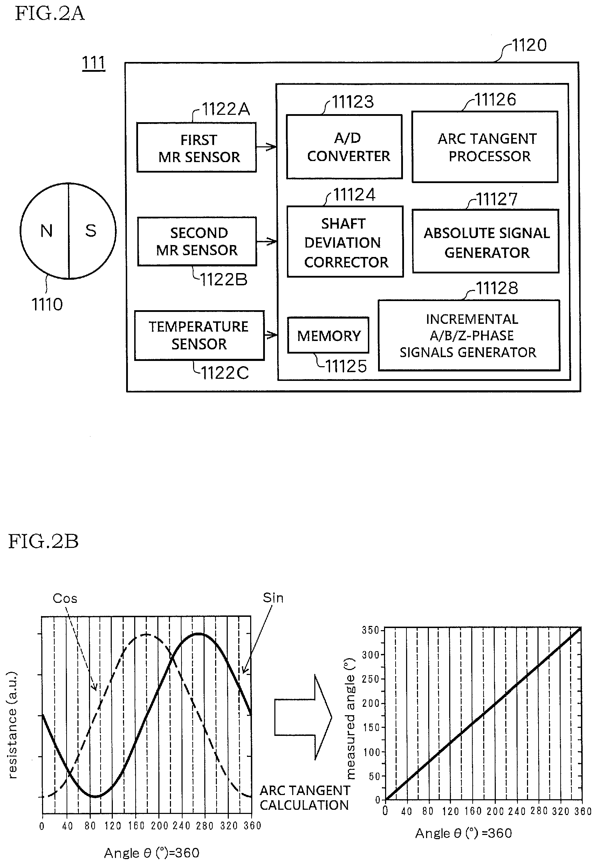

Next, a configuration example and a function of the MR sensor unit 111 will be described with reference to FIGS. 2A and 2B.

The MR sensor unit 111 may employ any one of magnetoresistive elements (MR: AMR, GMR, TMR, etc.), including a GMR as the MR sensor. The MR sensor unit 111 has a flat plate magnet 1110 and a sensor output processing unit 1120.

The sensor output processing unit 1120 is separated from the plate magnet 1110 at a position facing to the plate magnet 1110, and is fixed to the motor, for example, to the motor housing via a substrate. The sensor output processing unit 1120 includes a pair of MR sensors (first and second MR sensors) 1122A and 1122B, a temperature sensor 112C, and a sensor output processing circuit unit. The sensor output processing circuit unit is equipped with an A/D converter 11123, a shaft deviation corrector 1124, a sensor memory 11125 such as a RAM, an arc tangent processor 11126, an absolute signal generator 11127, and an incremental A/B/Z-phase signals generator 11128.

As shown in FIG. 2B, when the plate magnet 1110 fixed to the rotating shaft of the motor rotates by the angle θ (mechanical angle) and the direction of the magnetic field acting on each MR sensor rotates, the electrical resistance value of the MR sensor, in other words, the voltage of the output signal of the general-purpose sensor fluctuates in response to this rotation, and for each rotation of the rotation shaft of the motor 500, 360 degrees (mechanical angle) for each of the SIN wave and COS wave, that is, pulse signals for one cycle are output.

In the sensor output processing circuit unit, the analog signal of the pair of MR sensors is quantized, divided into multiple parts by the insertion processing of the electric angle, and converted into A, B-phase digital signals, respectively. These A, B-phase digital signals are cumulatively added by the pulse counter, and the value is calculated by the arc tangent processor 11126. As a result of this arc tangent calculation, a right-angled triangular signal in which the incremental value repeatedly increases and decreases linearly is generated in synchronization with the position of the angle 0 for each rotation of the rotating shaft.

The absolute signal generator 11127 generates absolute signal data indicating the absolute value of the rotation angle (mechanical angle) of the motor based on the linear signal output from the arc tangent processor 11126 and holds the data in the sensor memory 11125.

In the incremental A/B/Z-phase signals generator 11128, the incremental A-phase signal and B-phase signal pulse data are generated based on the linear signal output from the arc tangent processor 11126 and held the data in the sensor memory 11125, and a Z signal is also generated in synchronization with the position of the angle 0 (origin) that appears for each rotation of the rotating shaft (hereinafter, A, B, Z-phase signals).

An origin position (Z0) of the MR sensor 111 is a specific position on the plate magnet 1110 fixed to the rotating shaft of the motor, for example, a position corresponding to the time when the analog output value of the SIN wave in FIG. 2B is 0.

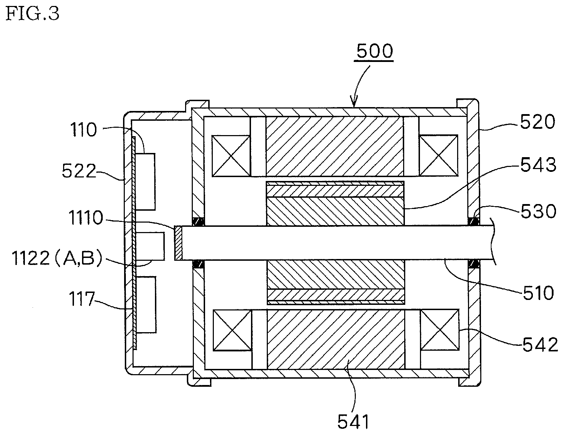

FIG. 3 is a vertical cross-sectional view showing an example of a main part of the brushless DC motor 500 to which the rotary encoder 110 of FIG. 1 is mounted. In this example, the disk-shaped plate magnet 1110 of the MR sensor 111 is fixed to one end surface of the rotating shaft 510 of the brushless DC motor 500 via a holding means (not shown).

The brushless DC motor 500 has a field iron core 541 and a field coil 542 wound around the field iron core 541 as a stator fixed inside the motor housing 520. A rotor magnet 543, which is formed integrally with the rotating shaft 510, is an 8-pole rotor having a rotor yoke and, for example, eight permanent rotor magnets fixed to the outer peripheral portion thereof. The rotating shaft 510 is held by a bearing 530 provided in the motor housing 210.

On the other hand, a substrate 117 on which the rotary encoder 110 is mounted is fixed inside the motor end cover 522. The sensor output processing unit 1120 of the MR sensor 111 including the pair of MR sensors 1122A and 1122B is installed at a position on the substrate 117 facing the plate magnet.

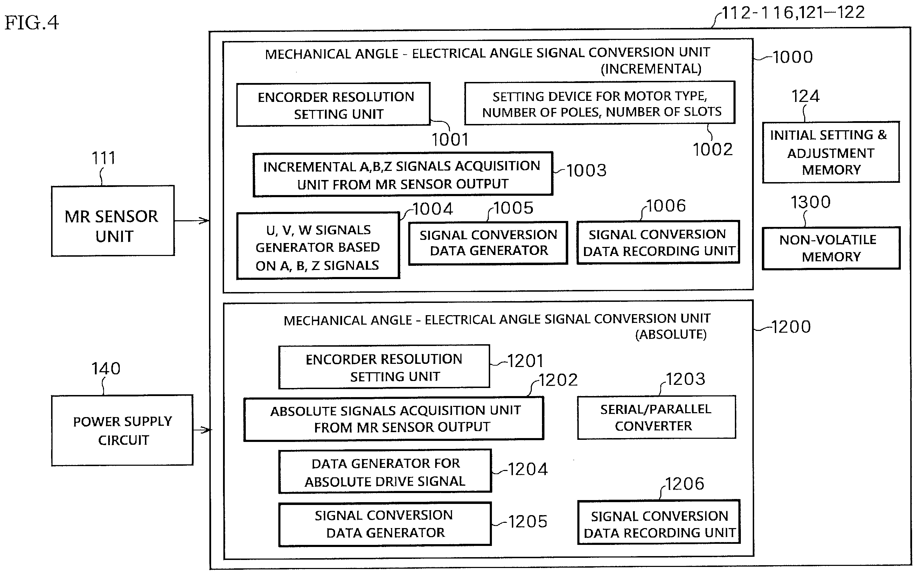

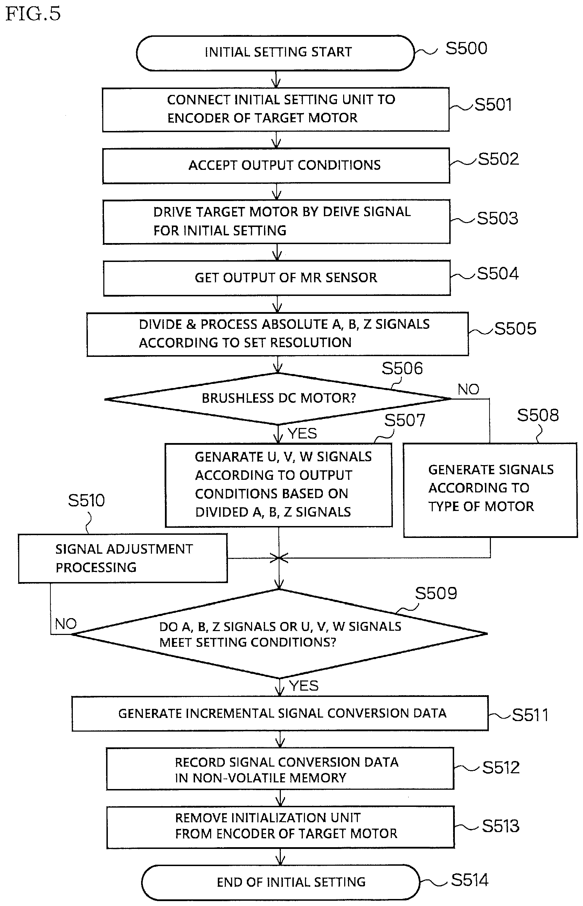

Next, with reference to FIGS. 4 and 5, a function of an incremental type initial setting system 100 for the rotary encoder of FIG. 1 will be described. That is, an incremental type initial setting function realized by the rotary encoder 110, the initial setting unit 120, and the output setting/switching section 130 at the time of initial setting will be described.

At the time of initial setting, the initial setting unit 120 and the output setting/switching section 130 are connected to the rotary encoder 110 of the DC motor 500 via a connector.

The initial setting system 100 for the rotary encoder of this embodiment comprises a mechanical angle-electric angle signal conversion unit (incremental) 1000 that generates an incremental signal as a signal for driving a motor by the signal conversion data generator (incremental) 122 of the initial setting unit 120 etc. and a mechanical angle-electric angle signal conversion unit (absolute) 1200 that generates an absolute signal as a signal for driving a motor by the signal conversion data generator (absolute) 123 of the initial setting unit 120 etc.

The mechanical angle-electric angle signal conversion unit (incremental) 1000 has an encoder resolution setting unit 1001, a specification setting device 1002 for setting motor specifications, such as motor type, number of poles, number of slots, etc., an incremental A, B, Z signals acquisition unit 1003 for acquiring data from the MR sensor output, a U, V, W signal generator 1004 for generating signals based on the A, B, Z signals, a signal conversion data generator 1005, and a signal conversion data recording unit (read/write) 1007.

Similarly, the mechanical angle-electric angle signal conversion unit (absolute) 1200 also has an encoder resolution setting unit 1201, an absolute signals acquisition unit 1202 for acquiring data from the MR sensor output, a serial/parallel converter 1203, a data generator for an absolute drive signal 1204, a signal conversion data generator 1205, and a signal conversion data recording unit (read/write) 12006.

Next, with reference to FIG. 5, a procedure for initial setting processing using the mechanical angle-electric angle signal conversion unit (incremental) 1000 of the initial setting system 100 will be described.

At the start of the initial setting (S500), the initial setting unit 120 and the output setting/switching section 130 of the initial setting system 100 are connected to the rotary encoder 110 mounted in the target motor 500 to be controlled via the connector (S501)). Next, the initial setting unit 120 receives the output condition set by the output setting/switching section 130 (S502). For example, when the target motor to which the encoder is mounted is an incremental type DC motor, the generation of an incremental signal is selected as the output type. In addition, the resolution of the encoder is set.

Further, data related to the type of motor, the number of poles, the number of slots, etc. are set. For example, the number NA/R of A, B, Z-phase signals per rotation of the motor and the number of repetitions Pn/R of U, V and W-phase signals per rotation are set. Further, conditions such as voltage output, open collector output, line driver output, and bus output are set.

Next, the initial setting unit 120 drives the target motor 500 by the motor drive signal generator 121 using the initial setting drive signal recorded in the initial setting/adjustment memory 124 (S503).

Then, then incremental A, B, Z signals acquisition unit 1003 acquires the incremental A, B, Z-phase signals (mechanical angle) etc. from the MR sensor output which are the outputs of the MR sensor unit 111 accompanying the rotation of the motor 500, and records the data in a buffer memory (S504). Further, the resolution setting unit 1001 of the encoder divides and processes the acquired signal data according to the set resolution (S505). Next, the type of the motor to be controlled set by the specification setting device 1002 is confirmed (S506).

When the set motor is a brushless DC motor, by the U, V, W signal generator 1004, A, B, Z, U, V, W-phase signals data (= electrical angle) corresponding to the set output condition are generated (S507). When the motor to be controlled is a brushed DC motor, A, B, Z-phase signals data (electrical angles) corresponding to the set output conditions are generated (S508).

Next, it is determined whether the generated signal satisfies the setting condition set by the specification setting device 1002 (S509). For example, the A, B, Z, U, V, W-phase signals data for the incremental type brushless DC motor, or the A, B, Z-phase signals data for the brushed DC motor are determined whether satisfies the setting condition. If the setting condition is not satisfied, the signal adjustment process is performed so as to satisfy the setting condition (S510).

When the setting conditions are satisfied, the signal conversion data generator 1005 generates incremental data (electric angle) as incremental signal conversion data (S511), and records this signal conversion data (read/read) in the non-volatile memory 1300 by the signal conversion data recording unit 1007 (S512), and the incremental type rotary encoder 110A is completed.

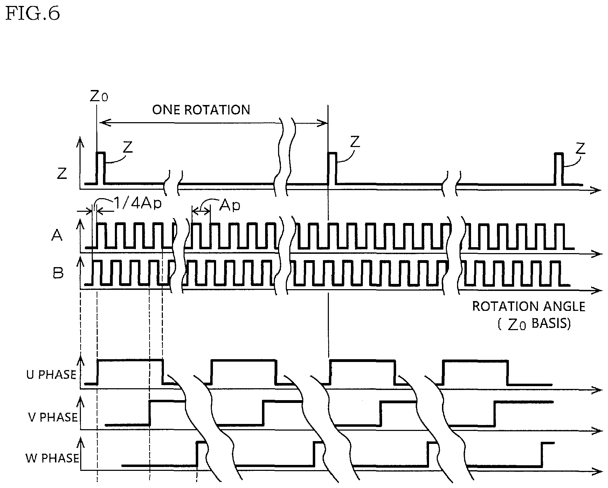

FIG. 6 is a diagram showing an example of a process of generating A-phase, B-phase, Z-phase, U, V and W-phase signals for an incremental type DC motor using the signal conversion data. As shown in FIG. 6, the incremental A and B signals (mechanical angles) based on the Z signal obtained from the MR sensor unit 111 of the rotary encoder 110 are converted into U, V and W-phase signals that are synchronized with the A, B, and Z signals using the signal conversion data. For example, in a case of forward rotation, a rise position of the U phase is determined in synchronization with the A signal synchronized with the rise of the Z signal, and the U signal data corresponding to this U phase is generated according to the number of poles of the motor. Similarly, V-phase and W phase signals data (electrical angles) having different phases are generated every 120 degrees of electric angle. These data are the driving signal data that are repeated every one rotation of the motor, that is, in the Z-phase signal unit.

Returning to FIG. 5, the initial setting unit 120 and the output setting/switching section 130 are removed (S513) from the encoder 110A to be initialized, and the initial setting is completed (S514).

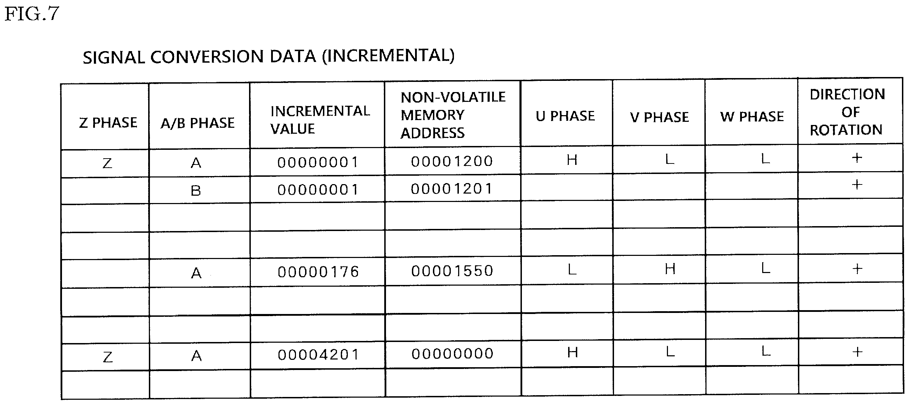

FIG. 7 is a diagram showing an image of an example of signal conversion data generated by the process of FIG. 5 and recorded in the non-volatile memory.

In this example, the signal conversion data is tabulated as data giving U, V and W-phase signals values corresponding to the incremental A, B-phase signals with reference to the Z-phase signal output from the MR sensor unit of the rotary encoder 110A.

For example, with respect to the A-phase signal having an incremental value of 0000001 (nonvolatile memory address is 00001200) output from the rotary encoder 110A, the U phase is H, and the V phase and W phase are L, and with respect to the signal of the A-phase signal having an incremental value of 0000176 (nonvolatile memory address is 00001550), the U phase is L, the V phase is H, and the W phase is L.

In this way, if the address of the non-volatile memory of the A, B-phase signals output from the MR sensor unit is known, the rotary encoder 110A can acquire U, V and W-phase signals data for the incremental type DC motor from the non-volatile memory by using the signal conversion data.

Returning to FIG. 5, next, the initial setting unit 120 and the output setting/switching section 130 are removed (S513) from the encoder 110A to be initialized, and the initial setting is completed (S514).

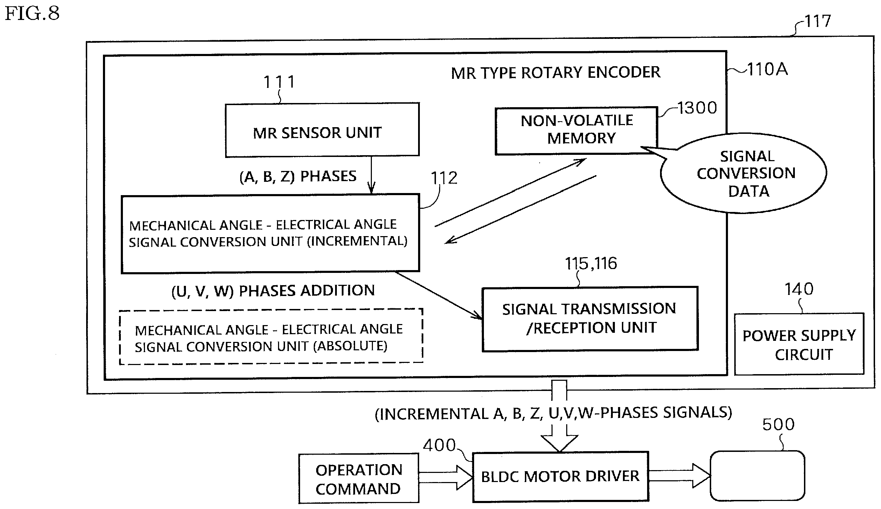

FIG. 8 is a diagram showing a state in which the incremental type rotary encoder 110A for which the initial setting has been completed is mounted on the incremental type brushless DC motor 500 to be mounted and used.

This rotary encoder holds the signal conversion data as shown in FIG. 7 in the non-volatile memory 1300. In the rotary encoder 110A, the signal conversion data generator (incremental) 122 can directly read out the initialized U, V and W-phase signal data (electrical angle) using the signal conversion data from the non-volatile memory 1300 based on the A, B, Z-phase signals (mechanical angles) which are the output signals from the MR sensor unit 111. Then, the incremental A, B, Z, U, V, W-phase signals are output to the driver 400 of the brushless DC motor via the signal transmission units 115 and 116.

Thus, according to this embodiment, at the time of initial setting, the rotary encoder 110 can be set as an incremental type rotary encoder 110A corresponding to the type of the motor to be mounted, using the mechanical angle-electric angle signal conversion unit (incremental) 112, the initial setting unit 120, and the output setting/switching section 130 of the rotary encoder 110. Therefore, a highly versatile rotary encoder that can meet the specifications of various incremental type DC motors can be provided.

Further, according to the rotary encoder 110A of the present embodiment, the signal for driving the DC motor can be directly acquired based on the output signal of the MR sensor unit and output to the driver 400 of the DC motor, so that an inexpensive rotary encoder 110A that simplifies the process for generating the drive signal of the DC motor and reduces the load on the microcomputer can be provided.

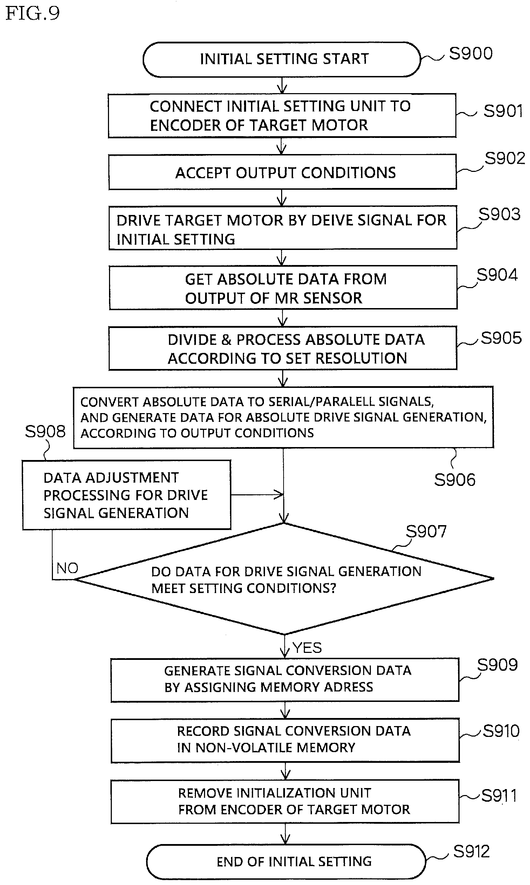

Next, another example of an initial setting processing corresponding to absolute procedure using the mechanical angle-electric angle signal conversion unit (absolute) 1200 of the initial setting system 100 will be described with reference to FIG. 9.

At the start of the initial setting (S900), the initial setting unit 120 and the output setting/switching section 130 of the initial setting system 100 are connected to the rotary encoder 110 mounted in the motor 500 to be controlled via a connector (S901).

Next, the initial setting unit 120 receives the output condition set by the output setting/switching section 130 (S902). In this example, the absolute signal is selected as the output. Further, the resolution of the encoder is set by the resolution setting unit 1201 of the encoder.

Next, the initial setting unit 120 drives the target motor with the initial setting drive signal generated by the motor drive signal generator 121 and recorded in the initial setting/adjustment memory 124(S903). Then, by the absolute signals acquisition unit 1202, acquires the absolute data (mechanical angle) from the output of the MR sensor unit that accompanies the rotation of the motor 500 and holds it in the buffer memory (S904).

Further, the absolute data is divided according to the set resolution (S905), and the divided absolute data is converted into serial and parallel signals by the serial/parallel converter 1203. The data generator for the absolute drive signal 1204 generates control absolute data (electrical angle) for driving signal generation, according to output conditions (S906).

Next, it is determined whether or not the generated data for driving signal generation satisfies the setting condition (S907). If the setting condition is not satisfied, the signal adjustment process is performed so as to satisfy the setting condition (S908). When the setting conditions are satisfied, the signal conversion data generator 1205 generates the signal conversion data (S909).

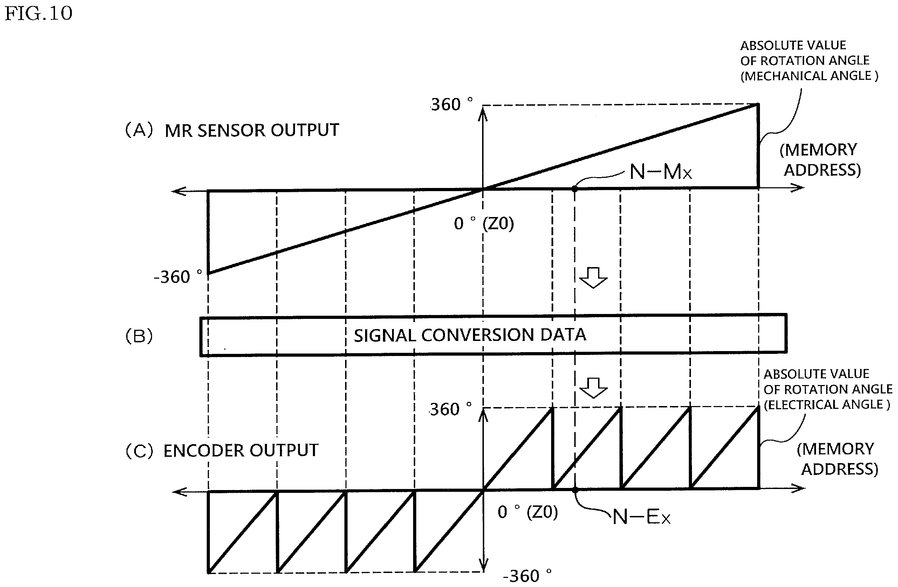

FIG. 10 is an image diagram showing an example of a generation process of information for generating a drive signal for the absolute type DC motor. The absolute signal (mechanical angle) as shown in (A) of FIG. 10 can be obtained from the MR sensor unit 111 of the rotary encoder 110.

The signal conversion data shown in (B) of FIG. 10 gives a correspondence between the addresses of the absolute signal (mechanical angle) and the absolute signal (electrical angle). For example, when the output value (address) of the MR sensor unit 111 is N-Mx (mechanical angle), the output value of the rotary encoder, that is, the data (address) for generating the drive signal is N-Ex (electric angle), based on the signal conversion data.

Returning to FIG. 9, this signal conversion data is recorded in the non-volatile memory 1300 of the rotary encoder 110 by the signal conversion data recording unit (read/write) 12006 (S910) to complete an absolute type rotary encoder 110B.

Next, the initial setting unit 120 and the output setting/switching section 130 are removed from the encoder 110B to be initialized (S911), and the initial setting is completed (S912).

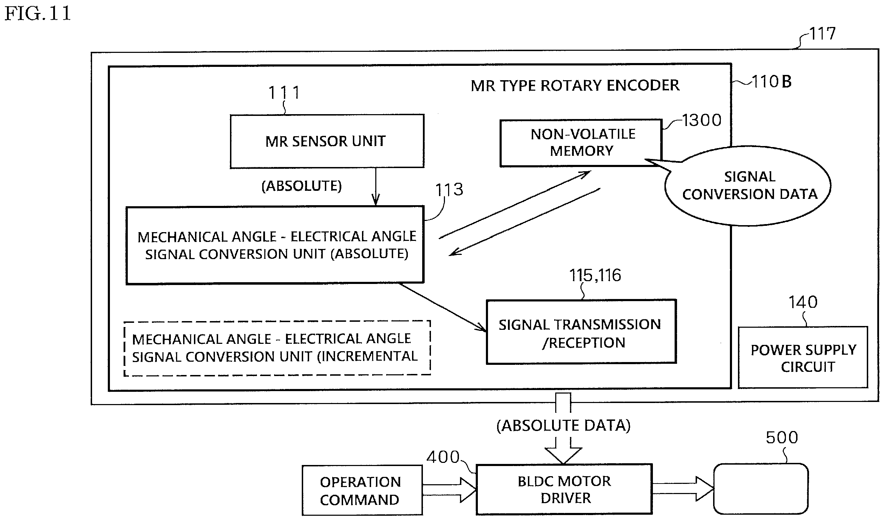

FIG. 11 is a diagram showing a state in which the rotary encoder 110B for which the initial setting has been completed is mounted on the absolute type DC motor and used.

In this example, the absolute type rotary encoder 110B that holds signal conversion data in the non-volatile memory 1300 is mounted on the brushless DC motor 500 and used.

In the rotary encoder 110 B, the signal conversion data generator (absolute) 123 can directly read out the data for signal generation (electric angle) from the non-volatile memory 1300 based on the absolute signal (mechanical angle) which are the output signals from the MR sensor unit 111. The data for generating the drive signal is output to the driver 400 of the brushless DC motor via the signal transmission/reception units 115 and 116.

As described above, according to the rotary encoder 110B of the present embodiment, the data of the initialized absolute signal for driving signal generation can be directly read out from the non-volatile memory 1300 based on the output signal of the MR sensor unit 111. In other words, an inexpensive rotary encoder that simplifies the process for generating data for generating a drive signal of a DC motor and reduces the load on the microcomputer can be provided.

Further, according to the present embodiment, at the time of initial setting, using the mechanical angle-electric angle signal conversion unit (absolute) 113, the initial setting unit 120, and the output setting/switching section 130 of the rotary encoder 110, the rotary encoder 110 can be set to the absolute type rotary encoder 110B, so that a highly versatile rotary encoder that can meet various motor specifications can be provided.

### Embodiment 2

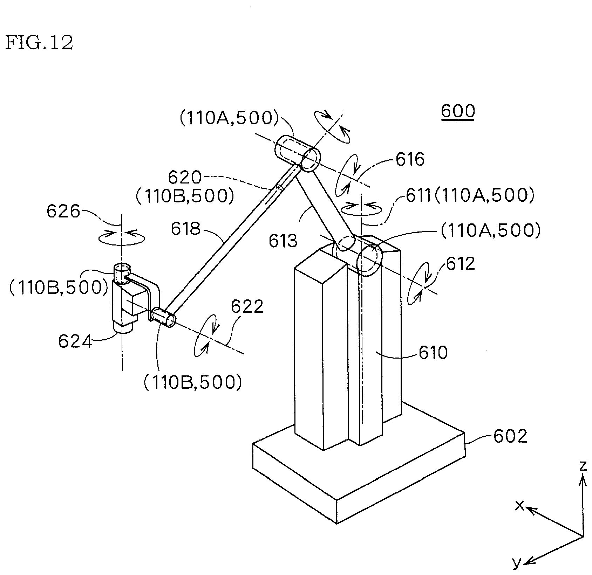

Next, a second embodiment in which the general-purpose rotary encoder of the present invention is applied to six axes articulated robot will be described with reference to FIG. 12.

An articulated robot 600 has a base portion 602, a main body portion 610, and a plurality of arm portions (613, 618, etc.) constituting a link. A control unit that controls the entire articulated robot 600 is provided in the main body unit 610. The joints are rotatably connected to each other by connecting the arms portions constituting the link. The base portion and arm portions are driven by actuators that rotates around each of the six axes. That is, the base portion and each arm portion are driven by their respective actuators so as to rotate about a S axis 611, a L axis 612, a U axis 616, a R axis 620, a T axis 622, and a B axis 626.

Each of these actuators include a brushless DC motor 500 provided with a rotary encoder 110 of the present invention and a reduction mechanism connected to an output shaft of each motor. An operation unit 624 is provided at the tip of the arm portion. Tools, cameras, etc. can be installed as the operation unit 624.

An incremental type brushless DC motor 500 equipped with a rotary encoder 110A having the mechanical angle-electric angle signal conversion unit (incremental) 112 of the present invention is used to drive each of the S-axis 611, the L-axis 612, and the U-axis 616. Further, for driving the R-axis 620, the T-axis 622, and the B-axis 626, an absolute type brushless DC motor 500 equipped with the rotary encoder 110B having the incremental mechanical angle-electric angle signal conversion unit (absolute) 113 of the present invention is used.

The control unit includes functions corresponding to the rotary encoders 110A and 110B and the driver 400 of the brushless DC motor shown in FIGS. 8 and 11, and each of arm portions is driven based on a command value, a load, and an output of each of the rotary encoders.

By properly using two types of brushless DC motors that use the rotary encoders 110A and 110B of the embodiment as six axes drive sources, it becomes controllable to more appropriately control the base side which is required a wide rotation range, and the arm side which is required high positioning accuracy. For example, it becomes controllable to provide an inexpensive motor having excellent control characteristics for an assembly line or a chip mounter.

Further, since the two types of brushless DC motors employ the same general-purpose rotary encoder that uses the MR sensor and reduces the load on the microcomputer by simplifying the process for generating the signal for driving the DC motor, so that an inexpensive device as a whole can be provided.

Further, according to the present embodiment, using the initialization system, a rotary encoder can be set to an incremental type rotary encoder or an absolute type rotary encoder at the time of initial setting, so that a highly versatile rotary encoder that can flexibly correspond to various motor specifications in a system can be provided.

By using the initial setting unit and the output setting/switching section described in the first embodiment, the specifications of all six motors are different as driving DC motor of six axes, so that it is easy to make all the specifications of the 6 rotary encoders different according to the individual drive conditions required for each axis.

In each of the above-described embodiments, a case where a computer performs necessary processing by executing a program recorded in a memory has been described. However, the present invention is not limited to these embodiments. For example, a part or all the functions of the arithmetic unit that operates based on the program may be configured by a dedicated LSI such as an ASIC (Application Specific Integrated Circuit) or an FPGA (Field-Programmable Gate Array).

According to the present invention, an inexpensive general-purpose rotary encoder by using the rotary encoder initialization system, suitable for use a DC motor as a drive source for various industrial devices can be provided.

### [Explanations of letters or numerals]

- 100: rotary encoder initial setting system
- 110: rotary encoder
- 110A: rotary encoder (incremental type)
- 110B: rotary encoder (absolute type)
- 111: MR sensor unit
- 1110: plate magnet
- 1120: sensor output processing unit
- 1122A: first MR sensor
- 1122B: second MR sensor
- 11123: A/D converter
- 11124: shaft deviation corrector
- 11125: sensor memory
- 11126: arc tangent processor
- 11127: absolute signal generator
- 11128: incremental A/B/Z-phase signals generator
- 112: mechanical angle-electric angle signal conversion unit (incremental)
- 113: mechanical angle-electric angle signal conversion unit (absolute)
- 114: encoder memory (non-volatile memory)
- 115: parallel signal transmission unit
- 116: serial signal transmission/reception unit
- 117: substrate
- 120: initial setting unit
- 121: motor drive signal generator
- 122: signal conversion data generator (incremental)
- 123: signal conversion data generator (absolute)
- 124: initial setting/adjustment memory
- 130: output setting/switching section
- 140: power supply circuit
- 400: motor driver
- 500: DC motor
- 510: rotating shaft
- 1300: non-volatile memory

## Claims

1. A general-purpose rotary encoder, comprising:
a MR sensor unit for outputting mechanical angle information of rotation angle of a rotation axis of a DC motor;
a mechanical angle-electric angle signal converter for converting output information of the MR sensor unit into signal information for generating a drive signal of the DC motor; and
a non-volatile memory,
wherein the mechanical angle-electric angle signal converter comprises:
an incremental type mechanical angle-electric angle signal conversion unit that converts the output information of the MR sensor unit into an incremental signal for generating the drive signal of the DC motor, and
an absolute type mechanical angle-electric angle signal conversion unit that converts the output information of the MR sensor unit into an absolute signal for generating the drive signal of the DC motor,
wherein the non-volatile memory has signal conversion data as initial setting data for converting the output information of the MR sensor unit into the incremental signal or the absolute signal for generating the drive signal of the DC motor, which corresponds to a type of the DC motor to which the rotary encoder is mounted, and
wherein the mechanical angle-electric angle signal converter is configured to convert the output information from the MR sensor unit into the signal for generating the drive signal of the DC motor based on the signal conversion data, during operation of the DC motor.

2. The general-purpose rotary encoder according to claim 1,
wherein the incremental type mechanical angle-electric angle signal conversion unit is intended for an incremental type brushless DC motor as the DC motor to which the rotary encoder is mounted,
wherein the incremental type mechanical angle-electric angle signal conversion unit is configured to acquire A, B, Z-phase signals corresponding to the rotation angle of the rotation axis of the brushless DC motor, as the output information of the MR sensor unit,
wherein, as the signal conversion data, the initial setting data includes data that gives values of U, V, and W-phase signals which are signals for generating the drive signal of the DC motor with respect to the A, B-phase signals, with reference to the Z-phase signal which is the output information of the MR sensor unit,
wherein the incremental type mechanical angle-electric angle signal conversion unit is configured to convert the acquired A, B, Z-phase signals into the U, V and W-phase signals using the signal conversion data.

3. The general-purpose rotary encoder according to claim 1,
wherein the absolute type mechanical angle-electric angle signal conversion unit is intended for an absolute type brushless DC motor as the DC motor to which the rotary encoder is mounted,
wherein the absolute type mechanical angle-electric angle signal conversion unit is configured to acquire an origin position of the brushless DC motor and an absolute signal corresponding to the rotation angle of the rotation axis of the brushless DC motor as output information of the MR sensor unit,
wherein, as the signal conversion data, the initial setting data includes data that gives value of electric angle of the absolute signal, which are signals for generating the drive signal of the DC motor with respect to the mechanical angle of the absolute signal, which is the output information of the MR sensor unit with respect to the origin position, and
wherein the absolute type mechanical angle-electric angle signal conversion unit is configured to convert the acquired absolute signal of the mechanical angle into the data of the absolute signal of the electric angle based on the origin position using the signal conversion data.

4. The general-purpose rotary encoder according to any one of claims 1-3,
wherein the signal conversion data is the initial setting data generated as data corresponding to configuration of the DC motor at the time of initial setting of the DC motor and recorded in the non-volatile memory, using an initial setting system,
wherein the initial setting system includes an initial setting unit connected to the rotary encoder and the MR sensor unit.
wherein the initial setting unit is provided with an output setting/switching section for inputting data related to the configuration of the DC motor and selecting an output format of the data of the rotary encoder, and
wherein the initial setting unit is configured to be removed from the rotary encoder when the initial setting of the DC motor is completed.

5. The general-purpose rotary encoder according to claim 4,
wherein, when the DC motor to which the rotary encoder is mounted is an incremental type brushless DC motor, the initial setting unit has a function of generating the signal conversion data, as the initial setting data, that gives the values of U, V, and W signals for driving the brushless DC motor to which the rotary encoder is mounted, based on the input information from the output setting/switching section, and recording the signal conversion data in the non-volatile memory.
